# FASCICULE DE BREVET EUROPEEN

(11) **EP 0 906 492 B1**
(45) Date de publication et mention de la délivrance du brevet: **13.03.2002**
(21) Numéro de dépôt: 97929365.1
(22) Date de dépôt: 17.06.1997
(51) Int. Cl.: F01B 17/02, F02B 75/10, F02B 41/00

(54) **PROCEDE DE FONCTIONNEMENT D'UN MOTEUR DEPOLLUANT ET UTILISATION SUR DES AUTOBUS URBAINS ET AUTRES VEHICULES**
LUFTVERSCHMUTZUNG BESEITIGENDES BETRIEBSVERFAHREN FÜR EINE BRENNKRAFTMASCHINE UND VERWENDUNG IN STADTBUSSEN UND ANDEREN FAHRZEUGEN
POLLUTION ABATING ENGINE RUNNING PROCESS AND APPLICATION ON CITY BUSSES AND OTHER VEHICLES

(30) Priorité: 17.06.1996 FR 9607714
(43) Date de publication de la demande: 07.04.1999
(73) Titulaire: Negre, Guy, 83170 Brignoles (FR)
(72) Inventeur: NEGRE, Guy, F-83170 Brignoles (FR); NEGRE, Cyril, F-83170 Brignoles (FR)
(74) Mandataire: Kohn, Philippe
(86) Numéro de dépôt international: FR9701088
(87) Numéro de publication internationale: WO9748884

(56) Documents cités:
- FR-A- 758 534
- FR-A- 1 009 307
- FR-A- 2 416 344
- US-A- 4 896 505

## Description

L'invention concerne un procédé d'utilisation d'un moteur dépolluant à chambre d'expansion indépendante, permettant notamment son installation sur des autobus urbains et autres véhicules.

Le demandeur a décrit et représenté dans sa demande WO-A-96/27737 publiée le 12/09/96 un procédé de dépollution de moteurs à chambre de combustion externe indépendante dans lequel le mélange air-carburant est aspiré et comprimé dans une chambre d'aspiration et de compression indépendante puis transféré (toujours en pression) dans la chambre de combustion indépendante pour y être enflammé, soit par étincelle dans le cas de moteur à mélange homogène, soit par auto-allumage dans le cas de moteur diesel à mélange hétérogène, afin d'augmenter la température et la pression dudit mélange qui, après ouverture d'un transfert reliant ladite chambre de combustion indépendante à une chambre de détente et d'échappement (elle aussi indépendante), est détendu dans cette dernière pour y produire un travail, puis évacué à l'atmosphère à travers un conduit d'échappement, dans lequel, et lors du fonctionnement en ville (ou à faible puissance), l'injecteur de carburant n'est plus commandé.

Dans ce cas on introduit dans la chambre de combustion, sensiblement après l'admission dans cette dernière de l'air comprimé (sans carburant) provenant de la chambre d'aspiration et de compression, une petite quantité d'air comprimé additionnel provenant d'un réservoir externe où l'air comprimé est stocké sous très haute pression. Cette petite quantité d'air comprimé à température ambiante va s'échauffer au contact de la masse d'air chaud contenue dans la chambre de combustion, se dilater de manière à augmenter la pression régnant dans la chambre de combustion, pour permettre de délivrer, lors de la détente, un travail moteur. Ce moteur utilise ainsi un fonctionnement de bi-modes ou bi-énergies.

Dans les zones urbaines et suburbaines, les transports en commun sont très souvent confiés à des autobus urbains motorisés par des moteurs conventionnels, le plus souvent diesel à mélange hétérogène et qui sont particulièrement polluants.

Des tentatives pour faire fonctionner ces véhicules avec des carburants moins polluants (diesel, GPL, etc.) ont été faites, mais les résultats en matière de pollution sont particulièrement faibles.

Le procédé selon l'invention d'utilisation d'un moteur dépolluant, en vue notamment de son installation sur les autobus urbains, permet non seulement de supprimer totalement les émissions de gaz polluants, mais aussi de dépolluer partiellement et considérablement l'air de la ville.

A cet effet, l'invention propose un procédé d'utilisation d'un moteur sans circuit de carburant comprenant une chambre d'aspiration et de compression indépendante reliée à une chambre d'expansion indépendante et à volume constant également reliée, par l'intermédiaire d'un transfert, à une chambre de détente et d'échappement, un conduit d'échappement, ainsi qu'un réservoir d'air sous très haute pression, dans lequel procédé l'air aspiré et comprimé par la chambre d'aspiration et de compression est transféré en pression dans la chambre d'expansion dans laquelle de l'air comprimé additionnel provenant du réservoir d'air est injecté à température ambiante dans la chambre d'expansion, après l'admission de l'air comprimé à haute température provenant de la chambre d'aspiration et de compression, l'air injecté :
- s'échauffe ainsi au contact de cette masse d'air à haute température ;
- se dilate et augmente la pression de l'air présent dans la chambre d'expansion, qui, après ouverture du transfert conduisant à la chambre de détente et d'échappement, est détendu dans cette dernière chambre pour y produire un travail
et finalement est évacué à l'atmosphère par le conduit d'échappement,
aucun carburant n'étant utilisé dans le procédé.

Selon une autre caractéristique de l'invention, l'air aspiré par le moteur est filtré et purifié à travers un filtre à charbon ou autre procédé mécanique, chimique, tamis moléculaire, ou autres, permettant ainsi de rejeter à l'atmosphère un air propre et dépollué.

Le procédé selon l'invention permet ainsi la suppression du circuit de carburant du moteur tel que décrit ci-dessus, au profit du seul fonctionnement en mono-mode avec l'injection d'air comprimé additionnel. Par l'implantation en amont de l'admission d'air dans la chambre d'aspiration et de compression du moteur d'un ou plusieurs filtres à charbon ou de tout autre procédé de filtrage et de purification (tels que tamis moléculaire, procédés chimiques, ou autres), l'invention permet non seulement d'arrêter les poussières et autres scories, mais aussi de purifier et dépolluer l'air admis dans le moteur.

Invention propose aussi une utilisation d'un moteur dépolluant suivant le procédé selon l'invention, caractérisée en ce qu'elle a lieu sur des autobus urbains et/ou sur des véhicules de services urbains,

On comprend dès lors le fonctionnement du moteur dépolluant suivant l'invention et ses avantages, notamment lorsqu'il est implanté sur des autobus urbains et le concours écologique par rapport aux moteurs conventionnels.

L'air comprimé additionnel stocké sous très haute pression dans les réservoirs du véhicule est filtré et purifié à travers des filtres à charbon, ou autres, avant d'être comprimé, l'air ambiant (pollué par les autres véhicules) aspiré par le moteur dans la chambre d'aspiration et de compression est de préférence filtré et purifié à travers le ou les filtres à charbon (ou tout autre procédé permettant de le purifier). Il est donc évident que l'air détendu et évacué par l'échappement reste filtré et purifié.

Par ailleurs le mode d'utilisation du moteur avec un carburant traditionnel ayant été supprimé, il ne peut subsister dans la chambre de combustion (qui est devenue de ce fait une chambre d'expansion) aucune particule ou autre résidu provenant d'une combustion antérieure.

Le procédé d'utilisation d'un moteur selon l'invention peut s'appliquer à tous les véhicules mais il nécessite une grande quantité d'air comprimé additionnel et des réservoirs de stockage sur le véhicule relativement importants.

Il est particulièrement intéressant dans sa mise en oeuvre à bord des autobus urbains en raison d'une part de la grande quantité d'air aspiré par le moteur qui permet donc de dépolluer des volumes importants, et, d'autre part, de la possibilité d'implanter sur l'autobus des réservoirs d'air comprimé additionnel d'une capacité importante.

Par ailleurs, l'autobus effectuant de nombreux arrêts, il est possible de re-remplir plus fréquemment le ou les réservoirs d'air comprimé additionnel installé(s) sur le véhicule en implantant des stations de remplissage aux arrêts de bus ou en tête de ligne, des stations de remplissage des réservoirs d'air comprimé additionnel sous très haute pression étant installées à cet effet soit en tête de ligne soit aux arrêts de bus.

II en va de même pour les véhicules de services (bennes à ordures et autres véhicules tels que taxis ou camionnettes fonctionnant en zones urbaines).

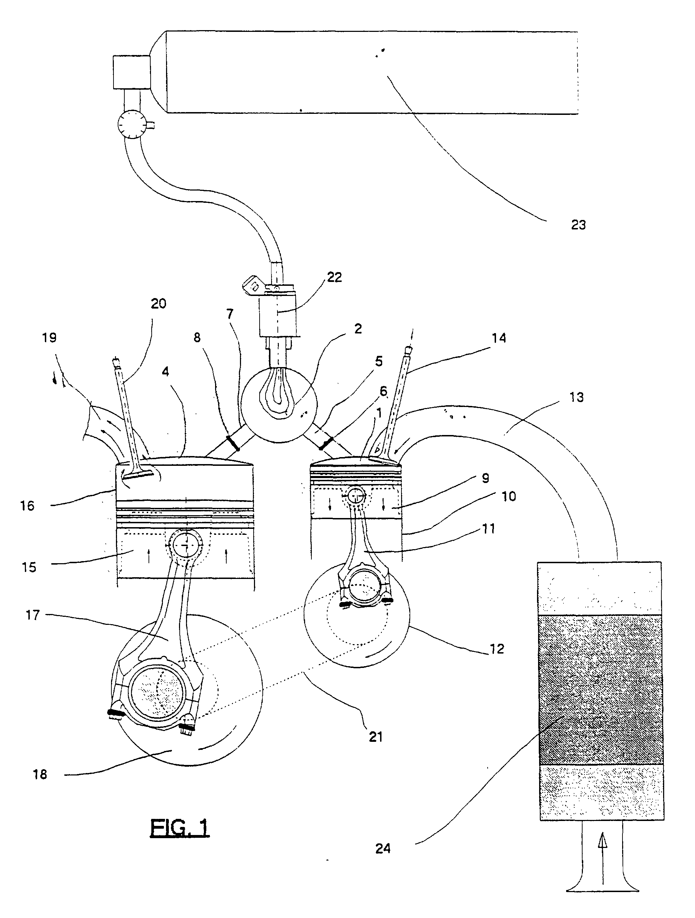

D'autres buts, avantages et caractéristiques de l'invention apparaîtront à la lecture de la description, donnée à titre non limitatif, d'un mode de réalisation de l'invention faite en regard du dessin annexé dans lequel la figure unique représente, schématiquement, vu en coupe transversale, un mode de réalisation d'un moteur utilisé suivant le procédé selon l'invention et dans lequel la chambre d'aspiration et de compression et la chambre de détente et d'échappement sont commandées chacune par un système à bielle-manivelle et piston coulissant dans un cylindre correspondant.

On peut voir sur la figure la chambre d'aspiration et de compression 1, la chambre d'expansion 2 à volume constant dans laquelle est implanté un injecteur d'air comprimé additionnel 22 alimenté en air comprimé stocké dans un réservoir très haute pression 23, et la chambre de détente et d'échappement 4.

La chambre d'aspiration et de compression 1 est reliée à la chambre d'expansion 2 par un conduit 5 dont l'ouverture et la fermeture sont commandées par un volet étanche 6. La chambre d'expansion 2 est reliée à la chambre de détente et d'échappement 4 par un conduit ou transfert 7 dont l'ouverture et la fermeture sont commandées par un volet étanche 8.

La chambre d'aspiration et de compression 1 est alimentée en air par un conduit d'admission 13 dont l'ouverture est commandée par une soupape 14 et en amont duquel est implanté un filtre à charbon dépolluant 24.

La chambre d'aspiration et de compression 1 fonctionne comme un ensemble de compresseur à pistons dans lequel un piston 9 coulissant dans un cylindre 10 est commandé par une bielle 11 et un vilebrequin 12.

La chambre de détente et d'échappement 4 commande un ensemble classique de moteur à piston avec un piston 15 coulissant dans un cylindre 16, qui entraîne, par l'intermédiaire d'une bielle 17, la rotation d'un vilebrequin 18. L'échappement de l'air détendu s'effectue à travers un conduit d'échappement 19 dont l'ouverture est commandée par une soupape 20. La rotation du vilebrequin 12 de la chambre d'aspiration et de compression 1 est provoquée, à travers une liaison mécanique 21, par le vilebrequin moteur 18 de la chambre de détente et d'échappement 4.

Le moteur est représenté alors que l'air dépollué et purifié à travers le filtre à charbon 24 a été aspiré et comprimé dans la chambre d'expansion 2 lors du cycle d'aspiration-compression réalisé par l'ensemble piston-bielle-manivelle 9,10,11, et alors que le conduit 5 a été obturé par le volet étanche 6.

L'air dépollué, purifié et comprimé dans la chambre d'expansion 2 est alors à température élevée (plusieurs centaines de degrés, selon les taux de compression choisis) et l'on actionne alors l'injecteur d'air comprimé additionnel 22 qui permet l'admission d'une petite quantité d'air comprimé à température ambiante détendue à une pression sensiblement supérieure à celle régnant dans la chambre d'expansion 2 afin de permettre sa pénétration dans la chambre.

Cette petite quantité d'air comprimé va s'échauffer au contact de la masse d'air à haute température contenue dans la chambre d'expansion 2, se dilater et augmenter la pression afin de produire un travail lors de sa détente commandée lorsque le piston de la chambre de détente 15 arrivera à son point mort haut, par l'ouverture du canal de transfert 7 commandée par le volet étanche 8.

La détente s'effectue à air chaud jusqu'au point mort bas du piston de détente 15 entraînant le vilebrequin moteur 18 et l'air détendu dépollué et purifié est ensuite évacué à l'atmosphère à travers le conduit d'échappement 19, la soupape 20 étant ouverte durant la remontée du piston 15 de la chambre de détente et d'échappement 4.

Les moyens utilisés pour filtrer l'air d'admission du moteur suivant l'invention, filtres à charbon, tamis moléculaire, micrométrique, procédés chimiques, ou autres, de même que le nombre de filtres utilisés peuvent varier sans pour autant changer le principe de l'invention de même qu'un ensemble -- chambre d'aspiration et de compression, chambre de combustion, et chambre de détente et d'échappement -- qui représente un élément de fonctionnement peut être multiplié à l'instar des moteurs pluri-cylindres conventionnels.

## Revendications

1. Procédé d'utilisation d'un moteur sans circuit de carburant comprenant une chambre d'aspiration et de compression indépendante (1) reliée à une chambre d'expansion indépendante et à volume constant (2) également reliée, par l'intermédiaire d'un transfert (5, 7), à une chambre de détente et d'échappement (4), un conduit d'échappement (19), ainsi qu'un réservoir (23) d'air sous très haute pression, dans lequel procédé l'air aspiré et comprimé par la chambre d'aspiration et de compression (1) est transféré en pression dans la chambre d'expansion (2) dans laquelle de l'air comprimé additionnel provenant du réservoir d'air (23) est injecté à température ambiante dans la chambre d'expansion (2), après l'admission de l'air comprimé à haute température provenant de la chambre d'aspiration et de compression (1), l'air injecté :
- s'échauffe ainsi au contact de cette masse d'air à haute température ;
- se dilate et augmente la pression de l'air présent dans la chambre d'expansion (2), qui, après ouverture du transfert conduisant à la chambre de détente et d'échappement (4), est détendu dans cette dernière chambre pour y produire un travail;
et finalement est évacué à l'atmosphère par le conduit d'échappement (19),
aucun carburant n'étant utilisé dans le procédé.

2. Procédé d'utilisation d'un moteur dépolluant selon la revendication 1, **caractérisé en ce que** l'air aspiré par le moteur est filtré et purifié à travers un filtre à charbon (24) ou autre procédé mécanique, chimique, tamis moléculaire, ou autres, permettant ainsi de rejeter à l'atmosphère un air propre et dépollué.

3. Utilisation d'un moteur dépolluant suivant le procédé selon l'une des revendications 1 ou 2, **caractérisée en ce qu'**elle a lieu sur des autobus urbains dans le but de dépolluer une grande quantité d'air en zone urbaine et suburbaine.

4. Utilisation d'un moteur dépolluant suivant le procédé selon l'une des revendications 1 ou 2, **caractérisée en ce qu'**elle a lieu sur des véhicules de services urbains dans le but de dépolluer une grande quantité d'air en zone urbaine et suburbaine.

## Patentansprüche

1. Verfahren zur Verwendung eines Motors ohne Treibstoffkreislauf, mit einer unabhängigen Kammer zur Belüftung und zur Kompression (1), die mit einer unabhängigen Kammer zur Expansion mit konstantem Volumen (2) verbunden ist, die ebenfalls mittels eines Transfers (5,7) mit einer Kammer zur Entspannung und zum Entweichen (4) verbunden ist, eine Entweichungsleitung (19), wie auch ein Reservoir (23) für Luft unter sehr hohem Druck, wobei bei diesem Verfahren die durch die Kammer zur Belüftung und Kompression (1) angesaugte und komprimierte Luft unter Druck in die Expansionskammer (2) transferiert wird, in der zusätzliche komprimierte Luft, welche aus einem Luftreservoir (23) stammt, bei Umgebungstemperatur in die Expansionskammer (2) injeziert wird, wobei nach Zugang der komprimierten Luft bei hoher Temperatur, die aus der Kammer zur Belüftung und zur Kompression (1) stammt, die injezierte Luft:
sich bei Kontakt mit der Luftmasse bei hoher Temperatur erwärmt;
sich ausdehnt und den Druck der Luft, die in der Expansionskammer (2) vorhanden ist, erhöht, welche, nach Öffnung des Transfers, der zu der Kammer zur Entspannung und zum Entweichen (4) führt, in der letzteren Kammer ausgedehnt wird, um eine Arbeit zu produzieren;
und schließlich über die Entweichungsleitung (19) an die Atmosphäre abgegeben wird, wobei in dem Verfahren kein Treibstoff verwendet wird.

2. Verfahren zur Verwendung eines schadstoffbeseitigenden Motors gemäß Anspruch 1, **dadurch gekennzeichnet, dass** die durch den Motor angesaugte und durch einen Kohlenstoffilter (24) oder ein anderes mechanisches, chemisches, molekulares oder anderes Verfahren gefilterte und gereinigte Luft es ermöglicht, an die Atmosphäre eine saubere und von Schadstoffen befreite Luft abzugeben.

3. Verwendung eines schadstoffbeseitigenden Motors gemäß dem Verfahren nach einem der Ansprüche 1 oder 2, **dadurch gekennzeichnet, dass** er in städtischen Autobussen mit dem Ziel der Befreiung von Schadstoffen einer großen Menge von Luft in städtischen oder vorstädtischen Bereichen eingesetzt wir.

4. Verwendung eines schadstoffbeseitigenden Motors gemäß dem Verfahren nach einem der Ansprüche 1 oder 2, **dadurch gekennzeichnet, dass** er in Fahrzeugen von städtischen Diensten eingesetzt wird, mit dem Ziel der Befreiung von Schadstoffen einer großen Menge von Luft in städtischen oder vorstädtischen Bereichen.

## Claims

1. Use method for an engine without fuel supply unit comprising an independent intake and compression chamber (1) connected to an independent and constant-volume expansion chamber (2) also connected, via a transfer (5, 7), to an expansion and exhaust chamber (4), an exhaust port (19), and a reservoir (23) for air at very high pressure, in which method air is drawn in and compressed by the intake and compression chamber (1) then transferred at pressure into the expansion chamber (2) into which additional compressed air from the air reservoir (23) is injected at ambient temperature in the expansion chamber (2), once the high-temperature compressed air from the intake and compression chamber (1) has been let in, the injected air :
- will heat up upon contact with this mass of air at high temperature ;
- will expand and increase the pressure in the expansion chamber (2), which, following the opening of the transfer leading to the expansion and exhaust chamber (4), is expanded in the latter chamber (4) in order to produce work therein ;
- and is finally exhausted to the atmosphere through the exhaust pipe (19),
no fuel being used in the method.

2. Use method for a pollution-reducing engine according to Claim 1, **characterized in that** the air drawn in by the engine is filtered and purified through a charcoal filter (24) or some other mechanical or chemical method, molecular sieve or the like, thus allowing clean and pollution-free air to be discharged into the atmosphere.

3. Use of a pollution-reducing engine for implementing the method according to Claim 1 or 2, **characterized in that** it takes place in urban buses with a view to removing pollution from a large amount of air in an urban and suburban environment.

4. Use of a pollution-reducing engine for implementing the method according to Claim 1 or 2, **characterized in that** it takes place urban service vehicles with a view to removing pollution from a large amount of air in an urban and suburban environment.
